# EUROPEAN PATENT APPLICATION

(11) **EP 2 071 750 A1**
(43) Date of publication of application: **17.06.2009**
(21) Application number: 07816935.6
(22) Date of filing: 20.09.2007
(51) Int. Cl.: H04J 3/16

(54) **A METHOD AND A SYSTEM FOR TRANSPORTING ETHERNET DATA IN OPTICAL TRANSPORT NETWORK**

(30) Priority: 16.02.2007 CN 200710079295
(71) Applicant: Huawei Technologies Co., Ltd., Longgang District, Shenzhen Guangdong Province 518129 (CN)
(72) Inventor: DONG, Limin, Shenzhen Guangdong Province 518129 (CN)
(74) Representative: Pfenning, Meinig & Partner GbR
(86) International application number: PCT/CN2007/070744
(87) International publication number: WO 2008/101377

(57) **Abstract**

A method and a system for transmitting Ethernet data in an optical transport network (OTN), mainly includes: filling justification byte or Ethernet service data bytes in at least two pairs of negative justification opportunity (NJO) bytes and positive justification opportunity (PJO) bytes in an overhead byte of an optical channel payload unit (OPUk) and filling Ethernet service data in a payload byte of the OPUk; and sending, by a transmitter, the Ethernet service data to a receiver through an optical distribution unit (ODUk) containing the OPUk. The invention realizes transparent transmission of the Ethernet service through a bit asynchronous CBR mapping method in the OTN, and solves the problem that the synchronous or bit asynchronous CBR mapping method in the prior art cannot meet the Ethernet interface frequency offset requirement defined by the IEEE.

## Description

### Field of the Invention

The present invention relates to the network communication field, and in particular, to a method and a system for transmitting Ethernet data in an Optical Transport Network (OTN).

### Background of the Invention

An OTN has various technological advantages such as perfect protection, performance monitoring, Operation, Administration and Maintenance (OAM) and Forward Error Correction (FEC), and has become the mainstream technology of backbone transport networks.

With the fast development of data services, the OTN can be adopted to transmit more and more data services such as Ethernet services. In the OTN, the General Frame Procedure - Frame model (GFP-F) protocol can be used to transport the Medium Access Control (MAC) layer data of the Ethernet service. However, sometimes users may use the Physical Coding Sublayer (PCS) of the Ethernet service to transmit private information or timing information. Therefore, it is not enough to transparently transmit the Ethernet service only via the MAC layer in the OTN. How to transmit the Ethernet service in the OTN has become an urgent issue to be solved.

The first method for transmitting the Ethernet service in the OTN in the prior art is that: in order to transparently transmit the 10GE LAN services in the OTN, the International Telecommunication Union - Telecommunication Standardization Sector (ITU-T) puts forward a solution to improve the rate of ODU2, generally referred to as an over clock method. The solution adopts the over clock bit synchronous mapping method, i.e., extracting the clock from the 10 GE LAN data stream and synchronizing the ODU2 mapping clock to the extracted clock. The receiver resumes the ODU2 mapping clock, performs de-synchronous mapping over the ODU2, and resumes the 10GE LAN data stream.

During the research on the invention, the inventor found that the OTN interface frequency offset in the first method for transmitting the Ethernet service in the OTN in the prior art is ±100ppm, which is beyond the OTN standard range. Therefore, the first method can only be applied to the point-to-point intra-domain interface (IaDI), and is not widely used.

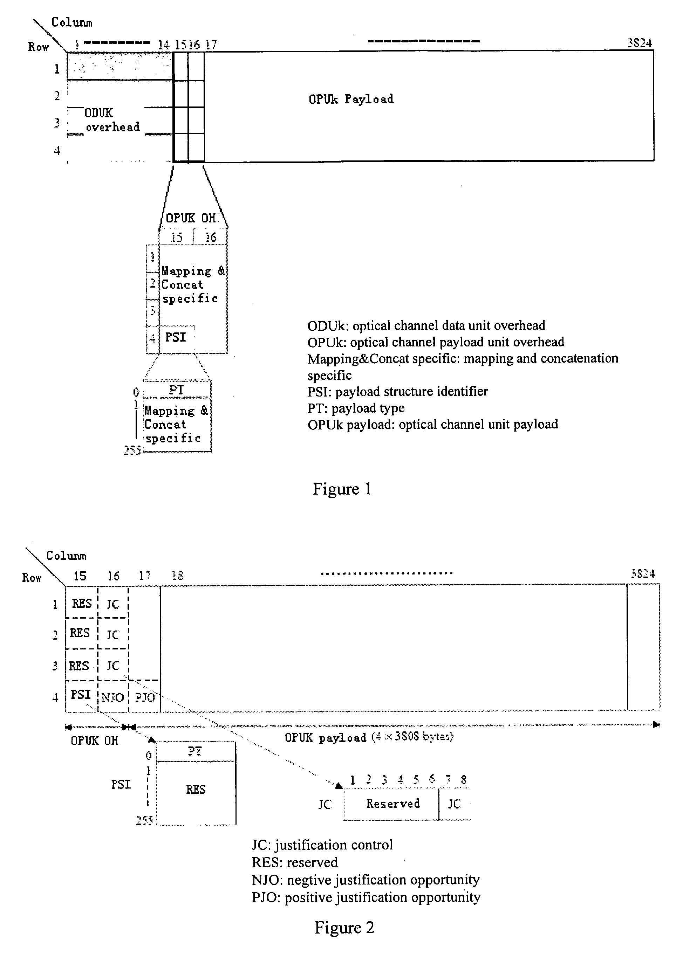

The frame structure of the optical channel data unit (ODUk) de fined in the second method of the prior art that realizes OTN asynchronous CBR mapping is shown in Figure 1. In the figure, the frame structure includes 4x3824 bytes, that is, there are 4 rows, and each row has 3824 bytes (columns). The 1-16 bytes in the frame structure shown in Figure 1 are ODUk overhead bytes, in which the 15^{th} and 16^{th} columns are the optical channel payload unit (OPUk) overhead (OPUk OH), 8 bytes in total (4 rows and 2 columns). The other 4x3808 bytes are the payload area of the OPUk bearing services, which are adapted to bear customers' service signals in the OTN.

The preceding OPUk OH is used for indicating adaptation service, in which the Payload Structure Identifier (PSI) bytes are used for indicating the service mapping structure type. The PSI bytes are in a multiframe structure with a period of 0-255. The bytes of the first frame of the PSI are Payload Type (PT) bytes, and the bytes of the other frames are for indicating virtual concatenation or are reserved. The service mapping types of the PT bytes that have been defined so far are listed in Table 1.

**Table 1**

| **Most significant 4 bits 1, 2, 3 and 4** | **Least significant 4 bits 5, 6, 7 and 8** | **Hexadecimal code** | **Interpretation** |
|---|---|---|---|
| 0 0 0 0 | 0 0 0 1 | 01 | Experimental mapping |
| 0 0 0 0 | 0 0 1 0 | 02 | Asynchronous Constant Bit Rate (CBR) mapping |
| 0 0 0 0 | 0 0 1 1 | 03 | Bit synchronous CBR mapping |
| 0 0 0 0 | 0 1 0 0 | 04 | Asynchronous Transfer Mode (ATM) mapping |
| 0 0 0 0 | 0 1 0 1 | 05 | Generic Framing Procedure (GFP) mapping |
| 0 0 0 0 | 0 1 1 0 | 06 | Virtual Concatenated signal |
| 0 0 0 1 | 0 0 0 0 | 10 | Bit stream with octet timing mapping |
| 0 0 0 1 | 0 0 0 1 | 11 | Bit stream without octet timing mapping |
| 0 0 1 0 | 0 1 1 0 | 20 | ODU multiplex structure |
| 0 1 0 1 | 0 1 0 1 | 55 | Not available |
| 0 1 1 0 | 0 1 1 0 | 66 | Not available |
| 1 0 0 0 | x x x x | 80-8F | Reserved codes for proprietary use |
| 1 1 1 1 | 1 1 0 1 | FD | NULL test signal mapping |
| 1 1 1 1 | 1 1 1 0 | FE | Pseudo-Random Binary Sequence (PRBS) test signal mapping |
| 1 1 1 1 | 1 1 1 1 | FF | Not available |

The CBR mapping type defined in Table 1 is for the Synchronous Digital Hierarchy (SDH) services, and the asynchronous CBR mapping for the Ethernet services is not defined. When PT is set to 02H, the mapping type carried by OPUk is asynchronous CBR mapping. In this case, the usage allocation of the OPUk OH is shown in Figure 2.

In Figure 2, the PJO is a positive justification byte, and the NJO is a negative justification byte. The PJO or the NJO can be used to compensate the frequency offset between customer service signals and ODUk data streams. The Justification Control (JC) byte is adapted to indicate whether the contents filled in the NJO/PJO are the frequency offset justification or data bytes.

During the research on the invention, the inventor found that the frequency offset range tolerated by the ODUk frame structure in the second method for transmitting Ethernet data in the OTN in the prior art cannot meet the frequency offset requirement for asynchronous CBR mapping by the Ethernet service.

### Summary of the Invention

An embodiment of the invention provides a method and a system for transmitting Ethernet data in an OTN, so as to transparently transmit Ethernet data in the OTN.

An embodiment of the invention is implemented through the following technical solution:

A method for transmitting Ethernet data in an OTN includes:
filling justification information or Ethernet data into at least two negative justification opportunity (NJO) bytes and at least two corresponding positive justification opportunity (PJO) bytes in the overhead byte of the OPUk and filling the Ethernet data into a payload byte of the OPUk; and
sending, by a transmitter, the Ethernet data to a receiver through the ODUk including the OPUk.

A transmitter for transmitting Ethernet data in an OTN includes:
a data filling module, adapted to fill justification information or Ethernet data in at least two NJOs and at least two corresponding PJOs of the OPUk OH and fill the Ethernet data in the payload byte of the OPUk; and
a data sending module, adapted to send the Ethernet data to a receiver through the ODUk including the OPUk after the data filling module completes the filling.

A receiver for transmitting Ethernet data in an OTN includes:
a mapping type identifying module, adapted to identify that the mapping type carried by an OPUk is asynchronous CBR Ethernet mapping according to the PT byte of the PSI in the OPUk OH;
a fill indication identifying module, adapted to identify that the contents filled in the at least two NJOs and at least two corresponding PJOs are justification or Ethernet data according to the JC byte of the OPUk OH; and
a data extracting module, adapted to extract the Ethernet data from the at least two NJOs, at least two corresponding PJOs and the payload byte of the OPUk according to information identified by the mapping type identifying module and the fill indication identifying module.

A system for transmitting Ethernet data in the OTN includes:
a transmitter, adapted to fill justification information or Ethernet data in at least two NJOs and at least two corresponding PJOs of the OPUk OH, fill the Ethernet data in the payload byte of the OPUk, and send the Ethernet data to a receiver through the ODUk including the OPUk; and
the receiver, adapted to identify that the mapping type carried by the OPUk is asynchronous CBR Ethernet mapping according to the PT byte of the PSI in the OPUk OH, identify that contents filled in the at least two NJOs and at least two corresponding PJOs are justification information or Ethernet data according to the JC byte of the OPUk OH, and extract the Ethernet data from the at least two NJOs, the at least two corresponding PJOs and the payload bytes of the OPUk.

According to the above technical solution provided by an embodiment of the present invention, we can see that by defining a new OPUk frame structure and operating rule, the Ethernet service may be transparently transmitted in the OTN through a bit asynchronous CRB mapping method, and the problem that the available bit synchronous/asynchronous CBR mapping method cannot meet the Ethernet interface frequency offset requirement defined by the Institute for Electrical and Electronics Engineers (IEEE) is solved.

### Brief Description of the Drawings

Figure 1 is a schematic diagram illustrating the frame structure of the ODUk defined in the prior art;

Figure 2 is a schematic diagram illustrating the usage allocation of the OPUk OH when the mapping type carried by the OPUk is asynchronous CBT mapping in the prior art;

Figure 3 is a flow chart illustrating the process of the method according to an embodiment of the present invention;

Figure 4 is a schematic diagram illustrating the OPUk frame structure improved for the CBR10GE service type according to an embodiment of the present invention;

Figure 5 is a schematic diagram illustrating the improved OPUk frame structure for the CBR10GE service type according to an embodiment of the present invention;

Figure 6 is a schematic diagram illustrating the improved OPUk frame structure for the CBR10GE service type according to an embodiment of the present invention;

Figure 7 is a schematic diagram illustrating the OPUk-2v frame structure for the bit asynchronous mapping Ethernet service according to an embodiment of the invention;

Figure 8 is a schematic diagram illustrating the OPUk-xv frame structure for the bit asynchronous mapping Ethernet service according to an embodiment of the invention; and

Figure 9 illustrates the structure of the system according to an embodiment of the invention.

### Detailed Description of the Embodiments

Embodiments of the present invention provide a method and a system for transmitting Ethernet data in an OTN.

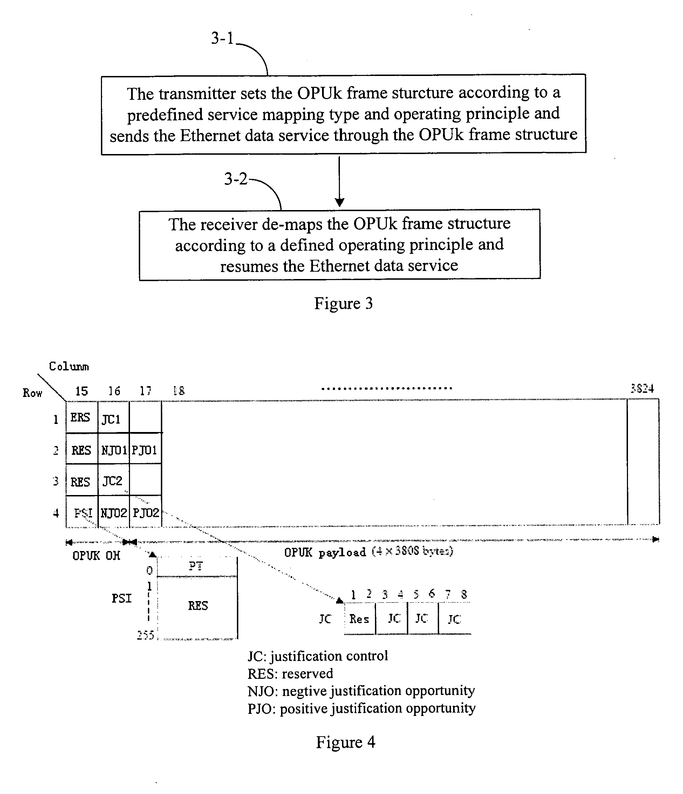

The following describes the invention in detail with reference to preferred embodiments and the accompanying drawings. As shown in Figure 3, a method provided in an embodiment of the invention includes the following steps:

Step 3-1: The transmitter configures corresponding OPUk frame structure, according to a pre-defined service mapping type and operating rule, and sends the Ethernet service by using the OPUk frame structure.

The Ethernet interface frequency offset defined by IEEE is ±100ppm, and the standard interface offset frequency in the OTN is ±20ppm. Because the mapping clock of the OPUk is synchronous with the Ethernet data stream clock, the OTN interface offset using the over clock bit synchronous mapping method in the prior art also becomes ±100ppm, which is beyond the OTN standard range. Modifying OTN frequency offset indicator involves a series of issues such as parts at the physical layer, network timing, jitter performance, and increases the difficulty of further standardization. Therefore, the method by using the over clock bit synchronous mapping in the prior art can only be used as the point-to-point IaDI, and is not widely applied.

A PJO or NJO byte can compensate a frequency offset of ±65ppm, and the fixed frequency offset of the OTN at each rate level is ±65ppm. Therefore, the ODUk frame structure using asynchronous CBR mapping mode in the prior art can realize a customer signal frequency offset of ±45ppm (65ppm-20ppm). The frequency offset definition of service CBR2Gf, CBR10G and CBR40G of SDH type can meet this frequency offset range. However, the Ethernet interface frequency offset defined by the IEEE is ±100ppm, so the customer signal frequency offset range tolerable by the ODUk frame structure using asynchronous CBR mapping mode is not applicable to the Ethernet interface defined by the IEEE. Thus it is impossible to simply increase the OPU2 rate using the above asynchronous CBR mapping method in the prior art to achieve bit asynchronous CBR mapping of the 10GE LAN.

The current CBR service defined by the OTN refers particularly to customer signals of SDH type, for example, CBR2G5, CBR10G, and CBR40G. In an OTN, the OPUk of the ODUk bears customer signals. To enable the ODUk frame structure to meet the frequency offset compensation of the Ethernet service, an embodiment of the invention makes some improvements to the original OPUk frame structure of the ODUk and puts forward a new OPUk frame structure by adding a service mapping type in the PI byte of the PSI byte. The asynchronous CBR mapping mode is adopted to transmit Ethernet signals.

According to an embodiment of the present invention, a defined new service type is added into the PI bytes. Taking CBR10GE as an example, an identification code is allocated in the PI byte of the PSI byte for the service type, and a corresponding bit asynchronous CBR10GE mapping type is added. For example, when the Hex code of PT is equal to 07H, it indicates the bit asynchronous CBR10GE mapping type associating the CBR10GE. The above asynchronous CBR mapping type is also applicable to other rate levels.

In an embodiment of the invention, at least two pairs of NJOs and PJOs are set in the overhead byte of the OPUk. The following describes the method and system provided in an embodiment of the invention by taking two pairs of NJPs and PJOs as an example.

For the above CBR10GE service type, an embodiment of the invention makes some improvements to the ODUk frame structure shown in Figure 1. The improved OPUk frame structure of the ODUk is shown in Figure 4.

As shown in Figure 4, the improved OPUk frame structure for the CBR10GE service of bit asynchronous mapping includes two pairs of NJP and PJO bytes and two JC bytes.

JC1 and JC2 are two justification control bytes, respectively used for indicating whether the contents at the location of NJO1/PJO1 and NJO2/PJ02 are justification information or Ethernet data. The first 2 bits of the JC byte (including JC1 and JC2) are reserved, and the 3-8 bits are used for indicating the content of NJO/PJO. The definition of the indication rule of the JC byte is shown in Table 2.

**Table 2**

| JC Bit: 7-8 | NJO | PJO |
|---|---|---|
| 0 0 | Justification byte | Data byte |
| 0 1 | Data byte | Data byte |
| 1 1 | Justification byte | Justification byte |
| Others | Not generated | |

The contents of the bits 3-4 and the contents of bits 5-6 of the JC byte are the same as the contents of bits 7-8

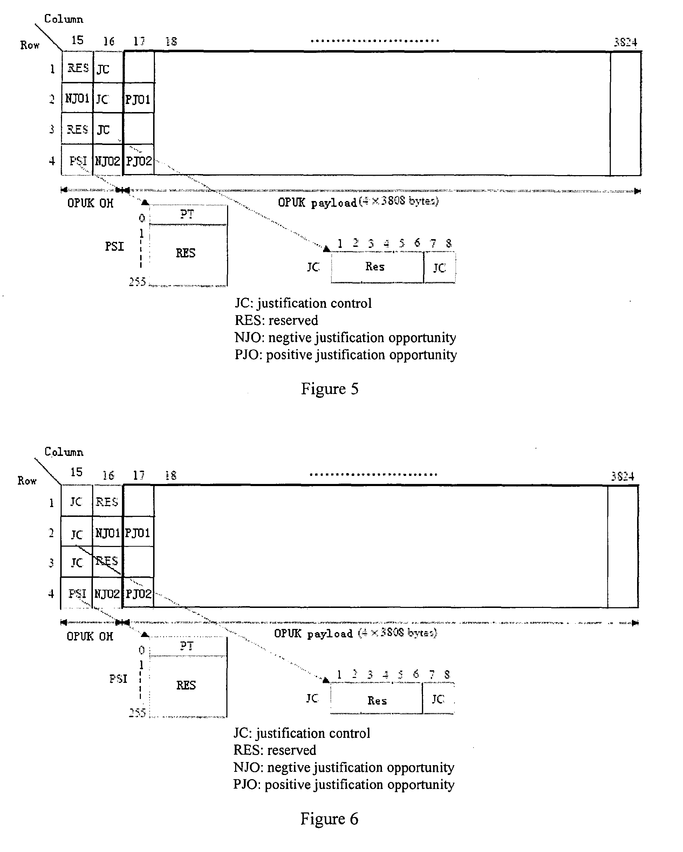

The locations of the two pairs of PJO/NJOs and the JC byte in the overhead byte of the OPUk may have different combinations. The generation and definition of interpretation rules for the JC byte may also have different combinations. For example, for the afore-said DBR10GE service type, an embodiment of the invention makes improvements to the ODUk frame structure shown in Figure 1. The improved OPUk frame structure is shown in Figure 5 and Figure 6.

After the ODUk frame structure is improved, i.e., after the bit asynchronous CBR10GE mapping is added in the PT byte of the PSI byte, the improved OPUk frame structure of the ODUk may be used to transmit the Ethernet service.

First, the PSI byte of the OPUk OH byte in the OPUk frame structure associating the CBR10GE service type is generated. The PT byte of the PSI byte indicates that the mapping type carried by the OPUk is bit asynchronous CBR10GE mapping.

During transmission of Ethernet customer data, the Ethernet customer data stream is cashed by an asynchronous read and write First in First out (FIFO) memory in the transmitter. The write clock of the FIFO memory is a recovery clock of the Ethernet customer data stream, and the read clock is a local OPUk mapping clock. The read clock and the write clock of the FIFO memory are asynchronous. Therefore, the frequency phases of the read clock and the write clock are not completely the same.

When the write clock is faster than the read clock, there will be more and more cached data in the FIFO memory, and when the cached data exceeds a preset first threshold value, the NJO needs to be started to fill the data bytes. First, according to the indication rules of the JC byte shown in Table 3, the corresponding JC byte in the OPUk frame structure is generated. When both the NJO1 and NJO2 are used to fill the Ethernet customer data stream, the value of the JC1 and JC2 byte is 01. Here the NJO1/PJO1 and the NJO2/PJO2 are both used to fill the Ethernet customer data stream, which speeds up the transmission of the Ethernet customer data stream.

When the write clock is slower than the read clock, the cached data in the FIFO memory will become less and less, and when the cached data is smaller than a preset second threshold value, the PJO needs to be started to fill the justification bytes. First, according to the indication rules of the JC byte shown in Table 3, the corresponding JC byte in the OPUk frame structure is generated. When both the PJO1 and PJO2 are used to fill the justification byte, the value of the JC1 and JC2 byte is 11. Here the NJO1/PJO1 and the NJO2/PJO2 are both used to fill the justification information, which slows down the transmission of the Ethernet customer data stream.

When the buffered data in the FIFO memory is between the first threshold and the second threshold, the NJO is a filling byte, and the PJO is a data byte.

The range of frequency offset that can be realized by the two pairs of NJOs/PJOs is ±2/(4X3808)=±130ppm, and the fixed frequency offset of the OPUk is ±120ppm. Therefore, the improved OPUk allows a frequency offset range of ±110ppm for a customer signal, which can meet the Ethernet rate frequency offset requirement of ±100ppm.

For services of the storage network type, such as Fiber Channel, ESCON and FICON, their frequency offset definition is similar to those of the Ethernet, which is ±100ppm, so the above method can be applied to realize bit asynchronous CBR mapping. Apparently, in other embodiments, the method of the invention may also be applied for transmission of data whose frequency offset is not defined as ±100ppm.

Step 3-2: The receiver de-maps the OPUk frame structure according to a defined operating rule and resumes the Ethernet data service.

The receiver receives the Ethernet customer data stream sent by the transmitter by using the OPUk frame structure, de-maps the OPUk frame structure according to the defined operating rule, and resumes the Ethernet data service.

The receiver first determines that the mapping type carried by the OPUk is bit asynchronous CBR10GE mapping, according to the indication of the PSI byte of the OPUk OH byte in the OPUk frame structure.

Then the receiver determines that the contents filled in the PJO/NJO byte are justification information or Ethernet data according to the interpretation rule of the JC byte shown in Table 3.

**Table 3**

| JC Bit: 7 and 8 | NJO | PJO |
|---|---|---|
| 0 0 | Justification byte | Data byte |
| 0 1 | Data byte | Data byte |
| 1 1 | Justification byte | Justification byte |
| Others | Justification byte | Data byte |

The interpretation rule of the JC byte shown in Table 3 is that: bits 3, 5 and 7 of the JC byte perform majority judging, and bits 4, 6 and 8 perform majority judging, i.e., the values of two or three bits of the 3 bits are same, the value is the interpreted value. For other values, NJO is interpreted as the justification byte by default, and PJO is interpreted as a data byte by default.

The JC1 indicates whether the contents filled in the NJO1/PJO1 are justification information or Ethernet data, and JC2 byte indicates whether the contents filled in the NJO2/PJ02 are justification information or Ethernet data. When the contents filled in the NJO1/PJO1 and NJO2/PJO2 are justification information, the justification information filled in the NJOs/PJOs needs to be removed from the received Ethernet customer data stream. In this case, the Ethernet customer data stream generates a random gap. A phase locked loop is needed to smooth the gap, remove jitters, and resume the clock of the Ethernet customer data stream.

The above mapping and de-mapping processes of the data stream are generally completed by the Application-Specific Integrated Circuit (ASIC).

To generate a larger service mapping channel for the future 100GE high rate Ethernet service, the virtual concatenation method may be used to generate a transmission channel with larger bandwidth.

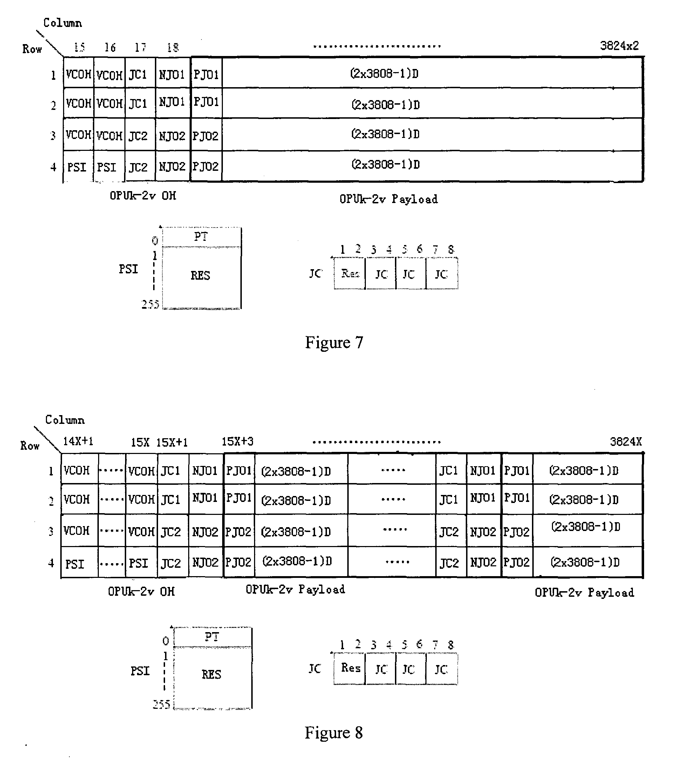

Figure 7 illustrates the OPUk-2v frame structure for bit asynchronous mapping Ethernet service, featuring two columns of virtual concatenation overhead bytes VCOH1-3. JC1 and JC2 are two justification control bytes, respectively used for indicating whether the contents in the locations of NJO1/PJO1 and NJO2/PJO2 in a same row are justification information of the frequency offset or Ethernet data. The indication rules of JC1 and JC2 are the same as those shown in Table 2, and the interpretation rule is the same as that shown in Table 3.

Similar to the OPUk-2v frame structure for bit asynchronous mapping Ethernet service shown in Figure 7, the OPUk-4v or OPUk-10v structure can be defined, which features X columns of overhead bytes (X=4,10). The JC byte column and the payload byte extends by times, taking the OPUk-2v structure as the basic structure. The OPUk-4v or OPUk-10v frame structure for bit asynchronous mapping Ethernet service is shown in Figure 8.

In the frame structure for mapping the Ethernet service in virtual concatenation bit asynchronous mapping mode shown in Figure 8, the first byte of the 0-255 multi-frame period of the PSI byte is set to PSI[0]=06H, used for indicating that the mapping type is virtual concatenation mapping. The second byte PIS [0] is allocated with an indication code, for indicating that the mapping type is bit asynchronous CBR mapping of Ethernet.

The generation of VCOH1-3 byte is defined according to 18.1.2. The OPUk-xv frame structure in virtual concatenation shown in Figure 8 is divided by columns into X OPUk frames shown in Table 2. VCOH columns are allocated to the first column of each OPUk OH by column, and NJO/PJOs are respectively allocated to corresponding locations of the OPUk. The payload is evenly divided by column to the corresponding area of each OPUk.

During transmission of the Ethernet customer data stream, the Ethernet customer data stream to be transmitted is cached using an asynchronous read and write FIFO memory in the transmitter. When the write clock is faster than the read clock, there will be more and more cached data in the FIFO memory, and when the cached data exceeds a preset first threshold value, the NJO needs to be started to bear the data bytes, and the corresponding JC byte in the OPUk frame structure is generated according to the indication rule of the JC byte shown in Table 2.

When the write clock is slower than the read clock, the cached data in the FIFO memory will become less and less, and when the cached data is smaller than a preset second threshold value, the PJO needs to be started to fill the justification information. According to the indication rule of the JC byte shown in Table 3, the corresponding JC byte in the OPUk frame structure is generated. The transmission of the Ethernet customer data stream speeds up, which prevents the FIFO memory from overflowing.

The receiver receives the Ethernet customer data stream sent by the transmitter and processes the PSI byte of each OPUk frame structure. After the PSI[0] is set to 06H and PSI[1] indicates the Ethernet bit asynchronous CBR mapping method, the receiver performs virtual concatenation delay compensation by caching the OPUk frame and resumes the virtual concatenation frame according to the frame structure mapping the Ethernet service in virtual concatenation bit asynchronous mapping defined above. Then it determines whether the contents filled in the NJOs/PJOs are justification information or Ethernet data according to the interpretation rule of the JC byte, smoothes the gap by a phase locked loop and resumes the data stream clock.

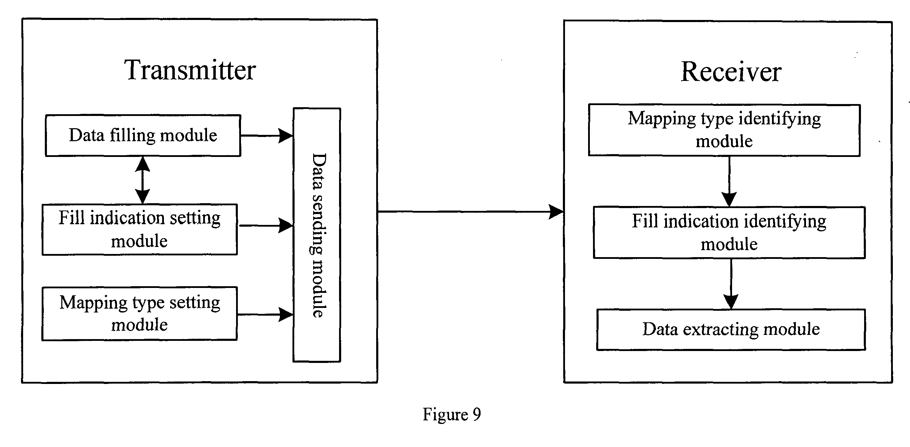

As shown in Figure 9, the structure of the system according to an embodiment of the invention includes a transmitter and a receiver.

The transmitter is adapted to fill justification information or Ethernet data in at least two pairs of NJOs and PJOs of an overhead byte of the OPUk, fill Ethernet service data in the payload byte of the OPUk, and send the Ethernet data through an ODUk containing the OPUk. The transmitter includes a data filling module, a data sending module, a mapping type setting module and a fill indication setting module.

The data filling module is adapted to fill justification information or Ethernet data in at least two pairs of NJOs and PJOs of an overhead byte of the OPUk, and fill Ethernet service data in the payload byte of the OPUk.

The data sending module is adapted to send the Ethernet service data through the ODUk containing the OPUk after the data filling module completes the filling.

The mapping type setting module is adapted to indicate that the mapping type carried by the OPUk is asynchronous CBR mapping such as asynchronous GBR10GE mapping through the PT byte of the PSI in the OPUk overhead byte. The asynchronous CBR10GE mapping type indicates that the mapping type of the OPUk is the mapping structure defined in an embodiment of the invention, i.e., it indicates that the OPUk overhead byte includes at least two pairs of NJOs and PJOs and corresponding justification JC bytes.

The fill indication setting module is adapted to indicate that the contents filled in the at least two pairs of NJOs and PJOs are justification information or Ethernet data through the JC byte of the OPUk overhead byte.

The receiver is adapted to receive the Ethernet service data sent by the transmitter, identify that the mapping type carried by the OPUk is asynchronous CBR10GE mapping according to the PT byte of the PSI in the OPUk overhead byte, identify that the contents filled in the at least two pairs of NJOs and PJOs are justification information or Ethernet data according to the JC byte in the OPUk overhead byte, and extract the Ethernet service from the at least two pairs of NJOs and PJOs and the payload byte of the OPUk. The receiver includes a mapping type identifying module, a fill indication identifying module and a data extracting module.

The mapping type identifying module is adapted to receive the Ethernet service data sent by the transmitter, identify that the mapping type carried by the OPUk is asynchronous CBR10GE mapping such as asynchronous CBR10GE mapping according to the PT byte of the PSI in the OPUk overhead byte.

The fill indication identifying module is adapted to identify that the contents filled in the at least two pairs of NJOs and PJOs are justification information or Ethernet data according to the JC byte in the OPUk overhead byte and the locations of the at least two pairs ofNJOs and PJOs in the OPUk overhead byte.

The data extracting module is adapted to extract Ethernet service data from the at least two pairs of NJOs and PJOs and the payload byte of the OPUk according to the information identified by the mapping type identifying module and the fill indication identifying module.

To sum up, embodiments of the present invention may realize transparent transmission of 10GE LAN service in asynchronous CBR mode in the precondition of improving the rate of the current OTN channel, and may maintain the current frequency offset definition of the OTN standard. The embodiments of the present invention are compatible with the originally defined operating method and operating protocol of virtual concatenation to realize high rate transmission of Ethernet service in bit asynchronous CBR mode.

When a method for transmitting Ethernet data in an OTN provided in an embodiment of the invention is independent of software, the software may be stored in any type of storage medium readable by computers. The software may be stored in a fixed recording medium, for example, it may be embedded in a disc-shaped medium of a computer system drive and store information in magnetic mode, optical mode or magneto-optic mode, or may be stored in a fixed recording medium of a computer system such as hard disk drive, or may be stored in a solid-state computer memory. In application, the system or device is provided with the storage medium of the software program code implementing the functions provided by embodiments of the invention, and the functions are implemented by reading and executing the program code stored in the storage medium in a computer (or CPU or MPU) of the system or the device. In this situation, the program code read from the storage medium implements the functions provided by the embodiments of the invention, and the storage medium that stores the program code constitutes the invention.

The foregoing descriptions are only preferred embodiments of the invention, and are not meant to limit the scope of protection of the invention. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for transmitting Ethernet data in an optical transport network (OTN), comprising:
filling justification information or Ethernet data in at least two negative justification opportunity (NJO) bytes and at least two corresponding positive justification opportunity (PJO) bytes in an overhead byte of an optical channel payload unit (OPUk), and filling the Ethernet data in a payload byte of the OPUk; and
sending, by a transmitter, the Ethernet data to a receiver through an optical channel data unit (ODUk) containing the OPUk.

2. The method of claim 1, wherein filling justification information or Ethernet data into at least two NJO bytes and at least two corresponding PJO bytes in the overhead byte of the OPUk comprises:
when transmitting an Ethernet data stream, caching the Ethernet data stream to be transmitted through an asynchronous read and write First in First out (FIFO) memory in the transmitter; and
when the cached data in the FIFO memory exceeds a preset first threshold, filling the Ethernet data in the at least two NJOs and at least two corresponding PJOs, and when the cached data in the FIFO memory is smaller than a present second threshold, filling justification information in the at least two NJOs and at least two corresponding PJOs.

3. The method of claim 1, further comprising:
indicating that the mapping type carried by the OPUk is Ethernet mapping of asynchronous constant bit rate (CBR) through a payload type (PT) byte of the payload structure identifier (PSI) in the OPUk overhead byte, where the Ethernet mapping type of asynchronous CBR indicates that the OPUk overhead byte includes at least two NJOs and at least two corresponding PJOs and associated justification control (JC) bytes.

4. The method of claim 3, further comprising:
indicating that the contents filled in the at least two NJOs and at least two corresponding PJOs in the OPUk overhead byte are justification information or Ethernet data.

5. The method of claim 3 or claim 4, further comprising:
after receiving the Ethernet data sent by the transmitter via the ODUk, by the receiver, identifying that the mapping type carried by the OPUk is the asynchronous CBR Ethernet mapping according to the PT byte, and identifying that the contents filled in the at least two NJOs and at least two corresponding PJOs are justification information or Ethernet data, and the locations of the at least two NJOs and at least two corresponding PJOs in the OPUk overhead type; and
extracting, by the receiver, the Ethernet data from the at least two NJOs, the at least two corresponding PJOs and the payload byte of the OPUk.

6. The method of any of claims 1 to 4, further comprising:
by the receiver, filling the Ethernet data into more than one OPUk, setting corresponding virtual concatenation identifiers in the overhead bytes of the more than one OPUk and sending the Ethernet data through the ODUk containing the OPUk; and
after receiving the Ethernet data sent by the transmitter through the ODUk, extracting, by the receiver, the Ethernet data from the more than one OPUk according to the virtual concatenation identifiers.

7. A transmitter for transmitting Ethernet data in an OTN, comprising:
a data filling module, adapted to fill justification information or Ethernet data into at least two NJO bytes and at least two corresponding PJO bytes in the overhead byte of the OPUk and fill the Ethernet data into a payload byte of the OPUk; and
a data sending module, adapted to send the Ethernet data to a receiver through an ODUk containing the OPUk, after the data filling module completes the filling.

8. The transmitter of claim 7, further comprising:
a mapping type setting module, adapted to indicate that the mapping type carried by the OPUk is asynchronous CBR Ethernet mapping through the PT byte of the PSI in the OPUk overhead byte, where the asynchronous CBR Ethernet mapping type indicates that the OPUk overhead byte includes at least two NJOs and at least two corresponding PJOs and associated JC bytes.

9. The transmitter of claim 8, further comprising:
a fill indication setting module, adapted to indicate that contents filled in the at least two NJOs and at least two corresponding PJOs in the OPUk overhead byte are justification information or Ethernet data.

10. A receiver for transmitting Ethernet data in an OTN, comprising:
a mapping type identifying module, adapted to identify that the mapping type carried by the OUPk is asynchronous CBR Ethernet mapping according to a PT byte of the PSI in the OPUk overhead byte;
a fill indication identifying module, adapted to identify that the contents filled in the at least two NJOs and at least two corresponding PJOs in the OPUk overhead byte are justification information or Ethernet data; and
a data extracting module, adapted to extract Ethernet data from the at least two NJOs, the at least two corresponding PJOs and a payload byte of the OPUk according to information identified by the mapping type identifying module and the fill indication identifying module.

11. A system for transmitting Ethernet data in an OTN, comprising:
a transmitter, adapted to fill justification information or Ethernet data into at least two NJO bytes and at least two corresponding PJO byte in the overhead byte of the OPUk, fill the Ethernet data into a payload byte of the OPUk, and send the Ethernet data to a receiver through an ODUk containing the OPUk; and
a receiver, adapted to identify that the mapping type carried by the OUPk is asynchronous CBR Ethernet mapping according to the PT byte of the PSI in the overhead byte of the OPUk, identify that the contents filled in the at least two NJOs and at least two corresponding PJOs in the OPUk overhead byte are justification information or Ethernet data, and extract Ethernet data from the at least two NJOs, the at least two corresponding PJOs and the payload byte of the OPUk according to information identified by the mapping type identifying module and the filling indicating identifying module.

12. The system of claim 11, further comprising:
a mapping type setting module, adapted to indicate that the mapping type carried by the OPUk is asynchronous CBR Ethernet mapping through a PT of the PSI in the OPUk overhead byte, where the asynchronous CBR Ethernet mapping type indicates that the OPUk overhead byte includes at least two NJOs and at least two corresponding PJOs and associated JC bytes; and
a fill indication setting module, adapted to indicate that the contents filled in the at least two NJOs and at least two corresponding PJOs in the OPUk overhead byte are justification information or Ethernet data.
